# EUROPÄISCHE PATENTSCHRIFT

(11) **EP 1 496 288 B1**
(45) Veröffentlichungstag und Bekanntmachung des Hinweises auf die Patenterteilung: **10.01.2007**
(21) Anmeldenummer: 03020332.7
(22) Anmeldetag: 09.09.2003
(51) Int. Cl.: F16F 15/131, F16F 15/134

(54) **Torsionsschwingungsdämpfer**
Torsional vibration damper
Amortisseur de vibrations torsionelles

(30) Priorität: 07.07.2003 EP 03015283
(43) Veröffentlichungstag der Anmeldung: 12.01.2005
(73) Patentinhaber: BorgWarner Inc., Auburn Hills MI 48326 (US)
(72) Erfinder: Kroll, Jürgen, 68775 Ketsch (DE); Bastel, Norbert, 68794 Obernhausen (DE); Ebner, Till, 64319 Pfungstadt (DE)
(74) Vertreter: Neunert, Peter Andreas

(56) Entgegenhaltungen:
- EP-A- 1 174 633
- EP-A- 1 371 875
- DE-A- 3 909 892
- DE-A- 10 005 996
- DE-A- 10 037 646
- DE-C- 4 345 542
- DE-C- 19 716 487
- FR-A- 2 749 634

## Beschreibung

Die Erfindung betrifft Torsionsschwingungsdämpfer gemäß dem Oberbegriff des Anspruchs 1.

Torsionsschwingungsdämpfer sind beispielsweise aus den Dokumenten DE 197 16 487 C1, DE 39 09 892 A1 oder DE 43 45 542 C2 bekannt.

Die Aufgabe der Erfindung besteht darin, einen Torsionsschwingungsdämpfer, insbesondere für Doppel- oder Anfahrkupplungen, bereitzustellen, welcher fliehkraftfest sowie einfach und kostengünstig in der Fertigung und der Montage ist und eine verbesserte Isolation von Motorvibrationen von der Sekundärseite ermöglicht.

Diese Aufgabe wird durch einen Torsionsschwingungsdämpfer mit den Merkmalen des Patentanspruchs 1 gelöst.

Vorteilhafte Ausführungen und Weiterbildungen der Erfindung sind in den Unteransprüchen angegeben.

Ein fliehkraftfester Torsionsschwingungsdämpfer der gattungsgemäßen Art, welcher eine verbesserte Isolation, d. h. eine verbesserte Dämpfung, der Motorvibrationen ermöglicht, kann in einfacher und kostengünstiger Weise realisiert werden, indem die Halbschalen als Bestandteile des Sekundärelements ausgeführt sind

Halbschalen, welche Bestandteile des Sekundärelements sind, sind überdies dann vorteilhaft, wenn der Torsionsschwingungsdämpfer als modulare Einheit in einen Antriebsstrang oder dergleichen einzusetzen ist. Eine oder beide der Halbschalen können auch Bestandteile eines anderen Aggregats, wie z. B. einer Kupplung, eines Getriebes oder dergleichen, sein. Diese Variante bietet sich insbesondere dann an, wenn der Drehschwingungsdämpfer Bestandteil oder Teilbestandteil des separaten Aggregats, insbesondere der Kupplung oder des Getriebes, ist und wenn schalenförmige Elemente ohnehin vorhanden sind, weil sie eine besondere Funktionalität im separaten Aggregat aufweisen.

Es hat sich als besonders vorteilhaft herausgestellt, wenn die Halbschalen wenigstens in einem Abschnitt formschlüssig aneinander grenzen. Ein Formschluss führt zu einer besonderen Steifigkeit und damit zu einer hohen Fliehkraftfestigkeit.

Bei einer besonders vorteilhaften Ausführungsvariante ist die eine der Halbschalen ein antriebsseitiges Halteblech und die andere der Halbschalen ein abtriebsseitiges Halteblech. Beide Haltebleche sind Bestandteile des Sekundärelements des Torsionsschwingungsdämpfers. Diese Variante stellt ein besonders vorteilhaftes Ausführungsbeispiel für einen modularen Aufbau eines Torsionsschwingungsdämpfers dar.

Alternativ hierzu kann auch eine der beiden Halbschalen ein antriebs- oder abtriebsseitiges Halteblech sein, welches wie im vorstehenden Ausführungsbeispiel Bestandteil des Sekundärelements des Torsionsschwingungsdämpfers ist. Die andere der beiden Halbschalen kann Bestandteil eines Gehäuses sein oder selbst ein Gehäuse insbesondere ein Kupplungsgehäuse, sein, welches beispielsweise mit dem Sekundärelement des Torsionsschwingungsdämpfers drehfest verbunden ist. Bei dieser Ausführungsvariante ist der Torsionsschwingungsdämpfer unmittelbar Bestandteil insbesondere der Kupplung, wobei das Kupplungsgehäuse und der Torsionsschwingungsdämpfer die Kupplung selbst räumlich einschließen.

In besonderer Ausgestaltung der vorstehend beschriebenen Varianten ist erfindungsgemäß vorgesehen, dass die eine der beiden Halbschalen eine Verzahnung aufweist und dass die andere der beiden Halbschalen hierzu korrespondierende Aussparungen, Ausnehmungen oder Öffnungen aufweist, in welche die Zähne der Verzahnung eingreifen. Greifen die Zähne der Verzahnung in Umfangsrichtung spielfrei in die Aussparungen, Ausnehmungen oder Öffnungen ein, so ist neben der einfachen und kostengünstigen Fertigung und Montage eine Drehmomentübertragung möglich.

Herstellung und Montage der beiden Halbschalen ist insbesondere dann einfach und kostengünstig, wenn die Zähne der Verzahnung im Wesentlichen in axialer Richtung verlaufen, sodass die beiden Halbschalen einander im Verzahnungsbereich axial durchdringen können.

In besonderer Ausgestaltung dieser Varianten ist vorgesehen, dass die Zähne endseitig radial, vorzugsweise nach innen, geknickt einen Haltebügel bildend verlaufen und dass die beiden Halbschalen mit Hilfe eines Sprengrings und wahlweise mit Hilfe eines Sicherungsrings aneinander fixierbar sind.

Zusätzlich oder alternativ hierzu sieht die Erfindung vor, die äußere der beiden Halbschalen endseitig mit einem Haltebügel auszustatten, sodass die beiden Halbschalen in vorstehend beschriebener Weise ebenfalls mit Hilfe eines Sprengrings und wahlweise mit Hilfe eines Sicherungsrings aneinander fixierbar sind.

Die Erfindung wird nunmehr anhand der Zeichnung beschrieben.
Es zeigen:
- Figur 1: ein erstes Ausführungsbeispiel eines erfindungsgemäßen nasslaufenden Torsionsschwingungsdämpfers in Explosionsdarstellung,
- Figur 2: Stützblech, antriebsseitiges Halteblech und Reibklötze des Torsionsschwingungsdämpfers gemäß der Figur 1 nach der Montage in Draufsicht,
- Figur 3A: ein zweites Ausführungsbeispiel eines erfindungsgemäßen nasslaufenden Torsionsschwingungsdämpfers im Axialhalbschnitt,
- Figur 3B: einen nasslaufenden Torsionsschwingungsdämpfer gemäß dem Stand der Technik im Axialhalbschnitt
- Figur 4A: den nasslaufenden Torsionsschwingungsdämpfer gemäß der Figur 3A im Radialhalbschnitt,
- Figur 4B: den nasslaufenden Torsionsschwingungsdämpfer gemäß dem Stand der Technik nach der Figur 3B im Radialhalbschnitt,
- Figur 5: einen Antriebsstrang mit einem dritten Ausführungsbeispiel eines erfindungsgemäßen Drehschwingungsdämpfers im Axialhalbschnitt
- Figur 6: einen Antriebsstrang mit einem vierten Ausführungsbeispiel eines erfindungsgemäßen Torsionsschwingungsdämpfers im Axialhalbschnitt,
- Figur 7: einen Antriebsstrang mit einem fünften Ausführungsbeispiel eines erfindungsgemäßen Torsionsschwingungsdämpfers im Axialhalbschnitt.

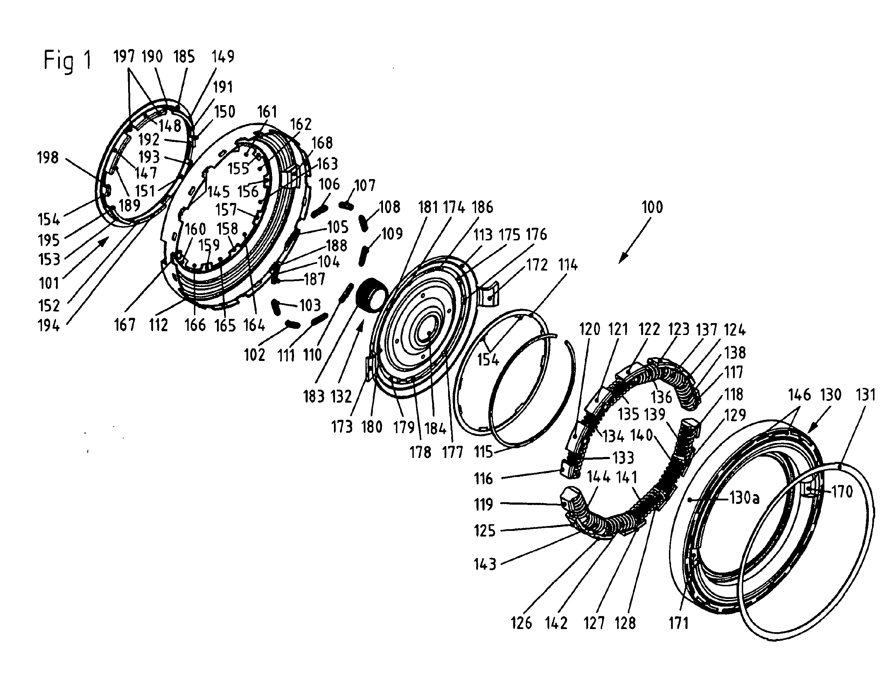

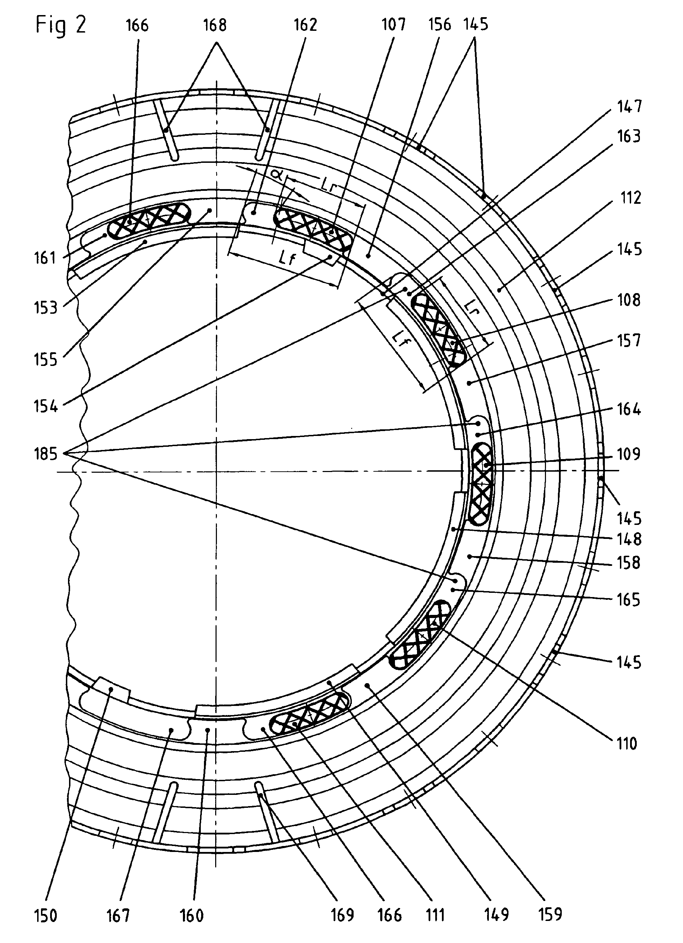

Den Figuren 1 und 2 entnimmt man ein erstes Ausführungsbeispiel eines nasslaufenden Torsionsschwingungsdämpfers 100. Dieser Torsionsschwingungsdämpfer 100 umfasst als wesentliche Bestandteile ein mit einer nicht dargestellten Antriebseinrichtung koppelbares Primärelement, welches in an sich bekannter Art als Nabenplatte 113 ausgebildet ist sowie ein relativ zu diesem drehauslenkbares, federelastisch mit dem Primärelement gekoppeltes, einen Abtrieb bildendes Sekundärelement, welches im Wesentlichen aus einem antriebsseitigen Halteblech 112 und einem abtriebsseitigen Halteblech 130 gebildet ist. Weiterhin ist eine Reibvorrichtung vorgesehen, welche zwischen dem Primärelement und dem Sekundärelement wirkt. Die federelastische Kopplung zwischen Primär- und Sekundärelement sowie die zwischen Primärelement und Sekundärelement wirksame Reibvorrichtung werden nachfolgend im Detail beschrieben.

Am einfachsten lässt sich die Funktionsweise des erfindungsgemäßen nasslaufenden Torsionsschwingungsdämpfers erläutern, wenn man dessen Montage im Einzelnen betrachtet:

Ausgangselement bildet ein Stützblech 101 in der Form eines Rings. Am Innenumfang eines in der Art einer Scheibe ausgebildeten Grundkörpers sind eine Mehrzahl axial ausgerichteter Axialstege 147, 148, 149, 150, 151, 152, 153, 154 vorgesehen, welche endseitig radial geknickt, sogenannte Radialstege 189, 190, 191, 192, 193, 194, 195, 196 bildend, verlaufen.

Auf dieses Stützblech 101 wird das vorstehend erwähnte antriebsseitige ringförmige Halteblech 112 aufgesetzt. Die Axial- und Radialstege 147, 148, 149, 150, 151, 152, 153, 154; 189, 190, 191, 192, 193, 194, 195, 196 durchgreifen das antriebsseitige Halteblech 112 axial.

Die Außenflächen der Axialstege 147, 148, 149, 150, 151, 152 153, 154 schließen dabei im Wesentlichen formschlüssig an den Innenumfang des antriebsseitigen Halteblechs 112 an, wie sich insbesondere der Figur 2 entnehmen lässt.

Das antriebsseitige Halteblech 112 weist im vorliegenden Fall am Innenumfang 10 zwischen diesen ebenfalls zehn Radialstege 155, 156, 157, 158, 159, 160 bildende Ausnehmungen auf. Diese Ausnehmungen bilden (in Verbindung mit dem Außenumfang des Stützblechs 101 bzw. der Außenwandung der Axialstege 147, 148, 149, 150, 151, 152, 153, 154 des Stützblechs 101) Öffnungen, welche nachfolgend als Kulissenöffnungen 161, 162, 163, 164, 165, 166, 167 bezeichnet sind.

Diese Kulissenöffnungen 161, 162, 163, 164, 165, 166, 167 dienen zur kulissensteinartigen Aufnahme von Reibklötzen 102, 103, 104, 105, 106, 107, 108, 109, 110, 111 (Figur 2).

Diese Reibklötze 102, 103, 104, 105, 106, 107, 108, 109, 110, 111 sind in Umfangsrichtung in den Kulissenöffnungen 161, 162, 163, 164, 165, 166, 167 anschlagsbegrenzt beweglich.

Auf die in der Figur 2 dargestellte Anordnung wird in einem weiteren Schritt die vorerwähnte Nabenplatte 113 aufgesetzt. Die Radialstege 155, 156, 157, 158, 159, 160 durchgreifen eigens dafür in der Nabenplatte 113 vorgesehene Axialstegdurchführöffnungen 174, 175, 176, 177, 178, 179, 180, 181. Die Axialstege 147, 148, 149, 150, 151, 152, 153, 154 greifen dabei derart in die Axialstegdurchführöffnungen 174, 175, 176, 177, 178, 179, 180, 181 ein, dass eine drehfeste Verbindung in der Art einer Verzahnung 197 entsteht.

Die axiale Erstreckung der Reibklötze 102, 103, 104, 105, 106, 107, 108, 109, 110, 111 ist so gewählt, dass die sich gegenüberliegenden Radialflächen gegen entsprechende Radialflächen des Stützblechs 101 und der Nabenplatte 113 abstützen. Diese Kontaktflächen bildenden Radialflächen stellen gleichzeitig die Reibflächen 185, 186, 187, 188 der erfindungsgemäßen Reibvorrichtung dar.

Die Nabenplatte 113 wird nunmehr axialkraftbeaufschlagt gegen das Stützblech 101 gehalten. Diese Axialkraft wird durch eine Tellerfeder 114 aufgebracht, welche mittels eines Sicherungsrings 115 zwischen den Radialstegen 189, 190, 191, 192, 193, 194, 195, 196 und dem Stützblech 101 kraftübertragend gehaltert ist. In Nabenplatte 113 ist zusammen mit dem Stützblech 101 gegenüber dem antriebsseitigen Halteblech 112 um einen Winkel verdrehbar, solange die jeweiligen Reibklötze 102, 103, 104, 105, 106, 107, 108, 109, 110, 111 nicht an den jeweiligen Radialstegen 155, 156, 157, 158, 159, 160 anstehen. Der Winkel, um welchen eine freie Verdrehung möglich ist, wird als Freiwinkel bezeichnet. Wird dieser Freiwinkel überschritten, so muss die zwischen den Reibflächen 155, 156, 157, 158 wirkende Reibkraft überwunden werden.

Weisen - wie im vorliegenden Fall gemäß den Figuren 1 und 2 - alle Kulissenöffnungen 161, 162, 163, 164, 165, 166, 167 gleiche Umfangslängen L_{f} auf und haben die Reibklötze 102, 103, 104, 105, 106, 107, 108, 109, 110, 111 unterschiedliche Umfangslängen Lᵣ₀, Lᵣ₁, so haben die Reibklötze 102, 103, 104, 105, 106, 107, 108, 109, 110, 111 in den jeweiligen Kulissenöffnungen 161, 162, 163, 164, 165, 166, 167 unterschiedliches Spiel, was sich in unterschiedlichen Freiwinkeln α₀, α₁ ausdrückt. Mit zunehmendem Verdrehwinkel ist daher eine zunehmende Reibkraft zu überwinden.

Neben der vorstehend beschriebenen Reibvorrichtung weist der Torsionsschwingungsdämpfer 100 auch eine parallel zu dieser Reibvorrichtung wirksame Federkopplung an sich bekannter Art auf. Konkret sind zwischen zwei radial gegenüberliegend angeordneten Abstützbügeln 168, 169 am antriebsseitigen Halteblech 112 eine Mehrzahl von Schraubenfedern 133, 134, 135, 136, 137, 138, 139, 140, 141, 142, 143, 144 in Umfangsrichtung angeordnet. Diese Schraubenfedern 133, 134, 135, 136, 137, 138, 139, 140, 141, 142, 143, 144 werden in an sich bekannter Art mittels sogenannter Gleitschuhe 116, 117, 118, 119, 120, 121, 122, 123, 124, 125, 126, 127, 128, 129 gehalten, welche sich reibungsarm an der Innenwandung des Außenumfangs radial und an der Radialfläche des antriebsseitigen Halteblechs 112 axial abstützen. Weiterhin stützen sich diese Gleitschuhe 116, 117, 118, 119, 120, 121, 122, 123, 124, 125, 126, 127, 128, 129 in axialer Richtung an einer Radialfläche eines abtriebsseitigen Halteblechs 130 ab, welches zu den Abstützbügeln 168, 169 des antriebsseitigen Halteblechs 112 korrespondierende und axial gegenüberliegend angeordnete Abstützbügel 170, 171 aufweist.

Das Halteblech 130 weist korrespondierend zu einer Axialverzahnung 145 des antriebsseitigen Halteblechs 112 Radialaussparungen 146 auf. Diese Axialverzahnung 145 greift funktionskomplementär in die Radialaussparungen 146 ein und verbindet dadurch die beiden Haltebleche 130 und 112 drehfest. Gleichzeitig überdecken sich die zylinderförmigen Abschnitte 112a und 130a der Haltebleche 130 und 112 im Wesentlichen formschlüssig. Die auf diese Weise entstehende Doppelschicht aus metallischen zylinderförmigen Abschnitten 112a und 130a ist besonders steif. Die axiale Fixierung des abtriebsseitigen Halteblechs 130 an dem antriebsseitigen Halteblech 112 erfolgt mittels einer Tellerfeder 131.

Die Nabenplatte 113 weist korrespondierend zu den Abstützbügeln 168, 169, 170, 171 des antriebsseitigen Halteblechs 112 und des abtriebsseitigen Halteblechs 130 in gegenüberliegender Anordnung zwei Abstützbügel 172, 173 auf. Verdreht man die Nabenplatte 113 mittels einer über eine Steckverzahnung 183, 184 mit der Nabenplatte 113 verbundenen Eingangsnabe 132, so werden die Abstützbügel 172, 173 der Nabenplatte 113 gegen zwei der endseitigen Gleitschuhe 116, 117, 118, 119 und die Abstützbügel 168, 169, 170, 171 der beiden antriebsseitigen und abtriebsseitigen Haltebleche 112, 130 gegen die anderen endseitigen Gleitschuhe 116, 117, 118, 119 gedrückt, so dass ein über die Nabenplatte 113 eingekoppeltes Drehmoment nur federgedämpft an die beiden das Sekundärelement bildenden Haltebleche 112, 130 übertragen wird.

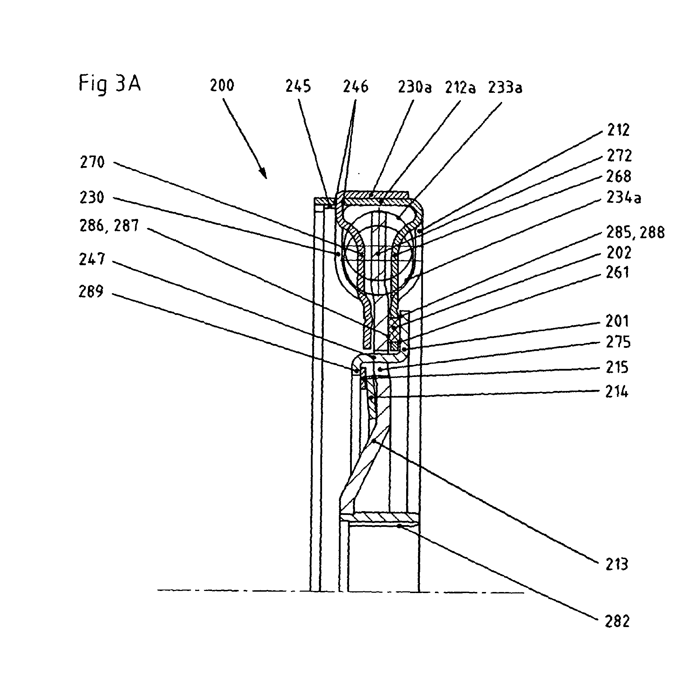

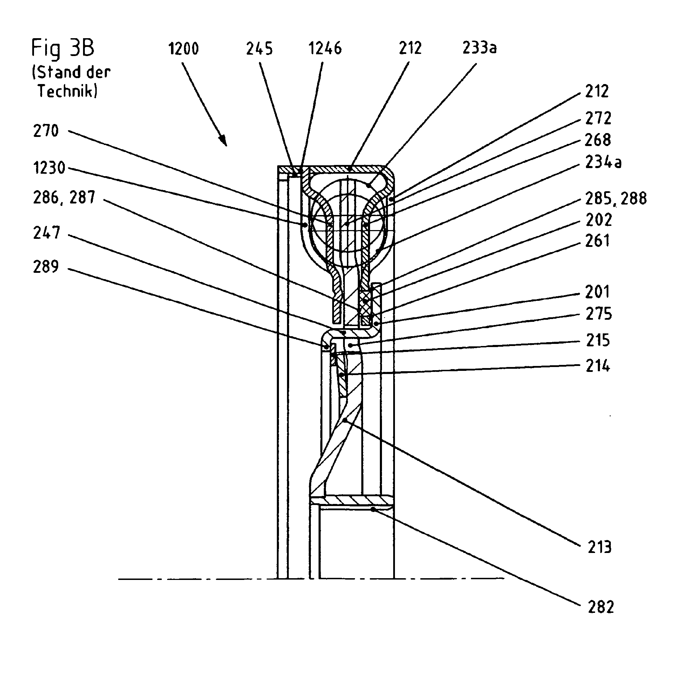

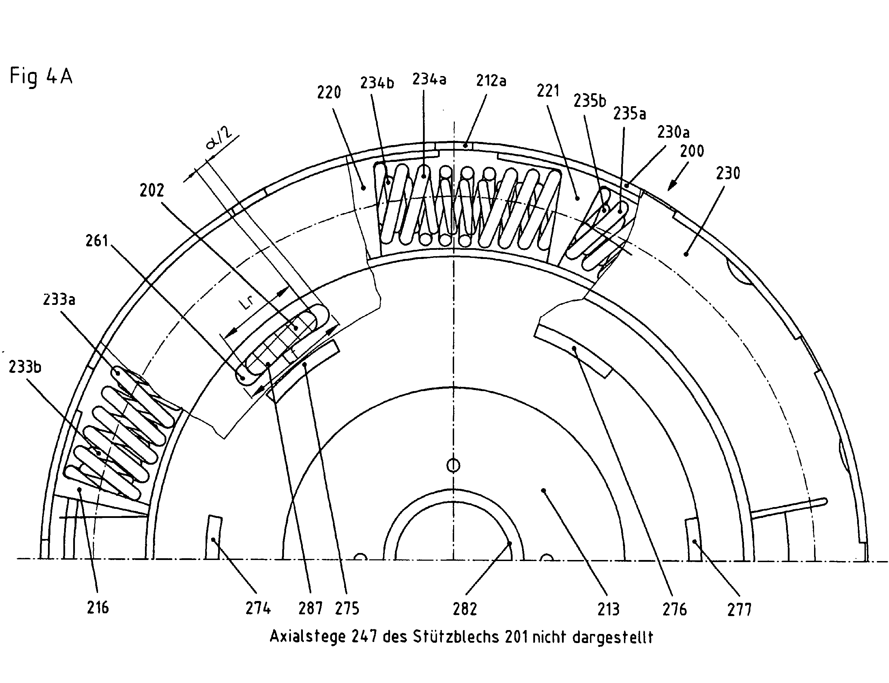

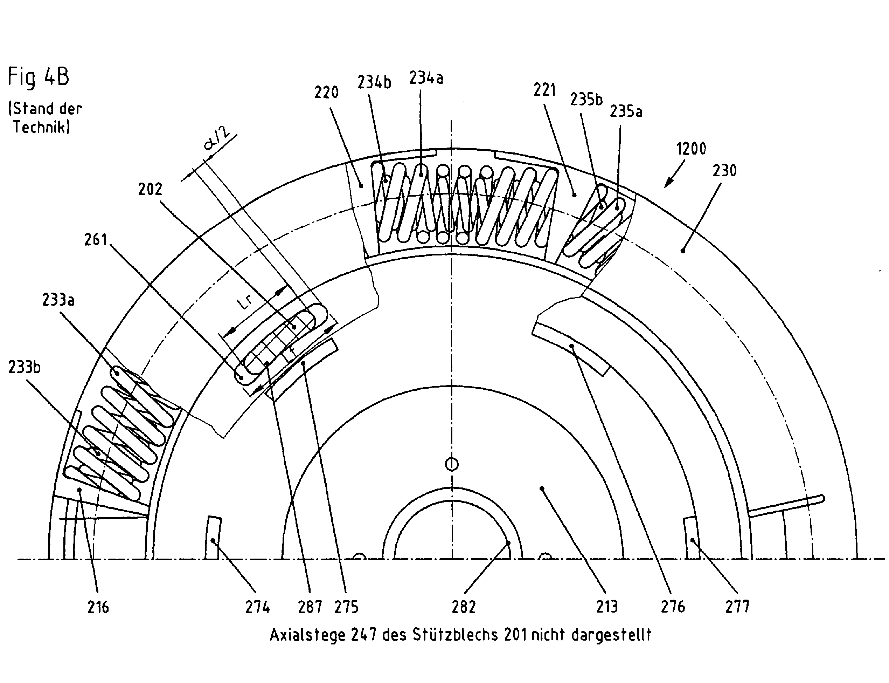

Eine zweite Ausführungsvariante eines erfindungsgemäßen Torsionsschwingungsdämpfers 200 entnimmt man den Figuren 3A und 4A. Dieser Ausführungsvariante ist in den Figuren 3B und 4B eine Version eines Torsionsschwingungsdämpfers 1200 gegenübergestellt, wie sie aus dem Stand der Technik bekannt ist. Gleiche Bestandteile der jeweiligen Torsionsschwingungsdämpfer sind in den Figuren 3A, 3B, 4A und 4B mit gleichen Bezugszeichen versehen.

Wie im vorstehend beschriebenen Ausführungsbeispiel umfassen die Torsionsschwingungsdämpfer 200, 1200 ein antriebsseitiges Halteblech 212 und ein abtriebsseitiges Halteblech 230, welche zusammen ein Sekundärelement bilden. Ebenso ist ein Stützblech 201 vorhanden, welches zusammen mit einer Nabenplatte 213 ein Primärelement bildet.

Im vorliegenden Ausführungsbeispiel sind eine Mehrzahl von Reibklötzen 202 vorgesehen, welche in entsprechenden Kulissenöffnungen 261 angeordnet sind und welche mittels Tellerfeder 214 und Sicherungsring 215 reibschlüssig gegen das Stützblech 201 und die Nabenplatte 213 gehalten werden. Die entsprechenden Reibflächen sind im vorliegenden Ausführungsbeispiel durch die Bezugszeichen 285, 286, 287, 288 gekennzeichnet. Die entsprechend dem vorstehenden Ausführungsbeispiel ebenfalls vorhandenen Axialstege und Radialstege sowie die in der Nabenplatte vorgesehenen Axialstegdurchführöffnungen sind in den Zeichnungen mit den Bezugszeichen 247, 289, 274, 275, 276, 277 gekennzeichnet.

Die Reibvorrichtung des vorliegenden Beispiels unterscheidet sich von der gemäß den Figuren 1 und 2 dadurch, dass die Kulissenöffnungen 261 nunmehr alleine durch entsprechende Durchbrüche im antriebsseitigen Halteblech 212 gebildet sind.

Der Vollständigkeit halber ist die Fensterlänge L_{f}, die Reibklotzlänge Lᵣ sowie der Freiwinkel α der Reibvorrichtung in den Figuren 4A und 4B eingezeichnet.

Auch die federelastische Kopplung zwischen Primärelement (Nabenplatte 213, Stützblech 201) und Sekundärelement (antriebsseitiges Halteblech 212; 212, abtriebsseitiges Halteblech 230; 1230) ist im Wesentlichen in vorstehend beschriebener Weise ausgeführt. Den Figuren 3A, 3B und 4A, 4B entnimmt man insbesondere die Abstützbügel 268, 270, 272 der beiden Haltebleche 212, 230; 212, 1230 und der Nabenplatte 213, an welchen sich die endseitigen Gleitschuhe 216 abstützen.

Abweichend vom vorangegangenen Ausführungsbeispiel ist die zwischen zwei Gleitschuhen 216, 220, 212 vorgesehene federelastische Kopplung nicht mittels einfacher Schraubenfedern realisiert, vielmehr ist hier ein koaxial angeordnetes Schraubenfederpaar, bestehend aus Außenfeder 233a, 234a, 235a und Innenfeder 233b, 234b, 235b vorgesehen.

Während die beiden Haltebleche 212 und 1230 bei dem Torsionsschwingungsdämpfer 1200 gemäß dem Stand der Technik jeweils endseitig eine Axialverzahnung 245 bzw. eine Radialverzahnung 1246 aufweisen, welche form- und/oder funktionskomplementär verdrehsichernd ineinander greifen, sind die Haltebleche 212, 230 weiter funktional aufeinander abgestimmt: So weist das Halteblech 230 korrespondierend zu der Axialverzahnung 245 des antriebsseitigen Halteblechs 212 Radialaussparungen 246 auf.

Die Axialverzahnung 245 greift funktionskomplementär in die Radialaussparungen 246 ein und verbindet dadurch die beiden Haltebleche 230 und 212 drehfest. Weiterhin ist das Halteblech 230 derart ausgebildet, dass es im Bereich der Schraubenfedern 233a, 233b; 234a, 234b; 235a, 235b formschlüssig am Halteblech 212 anliegt (Abschnitte 212a, 230a). Dadurch wird die Steifigkeit des Torsionsschwingungsdämpfers 200 gegenüber einem solchen herkömmlicher Bauweise 1200 signifikant erhöht.

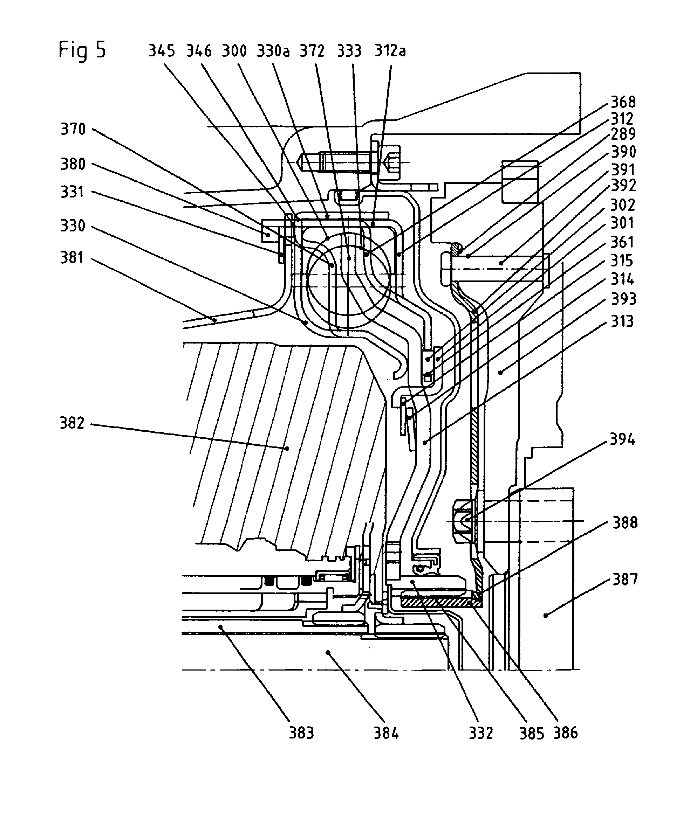

Die Figur 5 zeigt einen Antriebsstrang, bei dem ein erfindungsgemäßer Torsionsschwingungsdämpfer 300 vorgesehen ist.

Die Eingangswelle des Antriebsstranges wird durch die Kurbelwelle 387 gebildet, welche mit einem hier nicht dargestellten Verbrennungsmotor verbunden ist. Die Kurbelwelle 387 trägt ein Schwungrad 393 an sich bekannter Art. Die drehfeste Verbindung zwischen der Kurbelwelle 387 und dem Schwungrad 393 ist durch mehrere auf einem gedachten koaxialen Ring angeordnete Schrauben 13 realisiert.

Das Schwungrad 393 ist in dem Antriebsstrang gemäß der Figur 5 über ein Abkoppelungselement 392 in Form einer biege-/taumelweichen Scheibe mit einem Primärelement eines Torsionsschwingungsdämpfers 300 verbunden. Ein Sekundärelement des Drehschwingungsdämpfers 300, welches über eine Mehrzahl außenumfangsseitig angeordneter Schraubenfedern 333 drehschwingungsdämpfend mit dem Primärelement verbunden ist, ist mit einem Kupplungsgehäuse 381 einer Doppelkupplung 382 drehfest verbunden.

Diese Doppelkupplung ist dazu vorgesehen, das Kupplungsgehäuse 381 mit einer ersten Getriebeeingangswelle 383, vorliegend einer Hohlwelle 383, oder mit einer zweiten Getriebeeingangswelle 384, vorliegend einer Zentralwelle 384, schaltbar zu verbinden.

In dem Ausführungsbeispiel gemäß der Figur 5 ist das Abkoppelungselement 392 ringförmig ausgebildet.

Es besteht eine drehfeste Verbindung des Innenrandes 388 des Abkoppelungselements 392 mit dem Drehschwingungsdämpfer 300. Hierzu ist eine als Zusatzteil ausgebildete verzahnte Nabe 386 am Innenrad 388 des Abkoppelungselements 392 vorgesehen. Die Außenverzahnung dieser Nabe 386 greift in eine korrespondierende Innenverzahnung einer mit dem Primärelement des Drehschwingungsdämpfers 300 drehfest verbundenen Eingangsnabe 332 in der Art einer Steckverzahnung 385 ein.

Die außenumfangsseitige Anbindung des Abkoppelungselementes 392 an das Schwungrad 393 erfolgt durch Vernietung. Zu diesem Zweck sind in der Nähe des Außenrandes 389 in Umfangsrichtung hintereinander eine Mehrzahl von Fixieröffnungen 390 eingebracht, welche zur Aufnahme von Nieten 391 dienen.

Der Torsionsschwingungsdämpfer 300 weist entsprechend den vorangegangenen Ausführungsbeispielen ein antriebsseitiges Halteblech 312 und ein abtriebsseitiges Halteblech 330 auf,'welche zusammen ein Sekundärelement bilden. Ebenso ist ein Stützblech 301 vorgesehen, welches zusammen mit einer Nabenplatte 313 ein Primärelement bildet.

Im vorliegenden Ausführungsbeispiel sind wiederum eine Mehrzahl von Reibklötzen 302 vorgesehen, welche in entsprechenden Kulissenöffnungen 361 in vorstehend beschriebener Weise angeordnet sind und welche ebenso wie vorstehend beschrieben mittels Tellerfeder 314 und Sicherungsring 315 reibschlüssig gegen das Stützblech 301 und die Nabenplatte 313 gehalten werden.

Auch die federelastische Kopplung zwischen Primärelement (Nabenplatte 313, Stützblech 301) und Sekundärelement (antriebsseitiges Halteblech 312, abtriebsseitiges Halteblech 330) ist im Wesentlichen in vorstehend beschriebener Weise ausgeführt. Der Figur 5 entnimmt man insbesondere die Abstützbügel 368, 370, 372 der beiden Haltebleche 312, 330 und der Nabenplatte 313, an welchen sich die endseitigen Gleitschuhe abstützen. Weiterhin eingezeichnet ist exemplarisch eine Schraubenfeder 333.

Die Haltebleche 312, 330 des Sekundärelements sind wie vorher erfindungsgemäß funktional aufeinander abgestimmt: So weist das Halteblech 330 korrespondierend zu der Axialverzahnung 345 des antriebsseitigen Halteblechs 312 Axialaussparungen 346 auf. Die Axialverzahnung 345 greift funktionskomplementär in die Axialaussparungen 346 ein und verbindet dadurch die beiden Haltebleche 330 und 312 drehfest. Die Haltebleche 330, 312 werden mit Hilfe eines von einem Haltebügel 380 gehaltenen Sicherungsrings oder einer Tellerfeder 331 gegen axiale Relativbewegungen gesichert. Weiterhin ist das Halteblech 330 derart ausgebildet, dass es im Bereich der Schraubenfedern 330 formschlüssig am Halteblech 312 anliegt (Abschnitte 312a, 330a). Dadurch wird die Steifigkeit des Torsionsschwingungsdämpfers 300 gegenüber einem solchen herkömmlicher Bauweise signifikant erhöht.

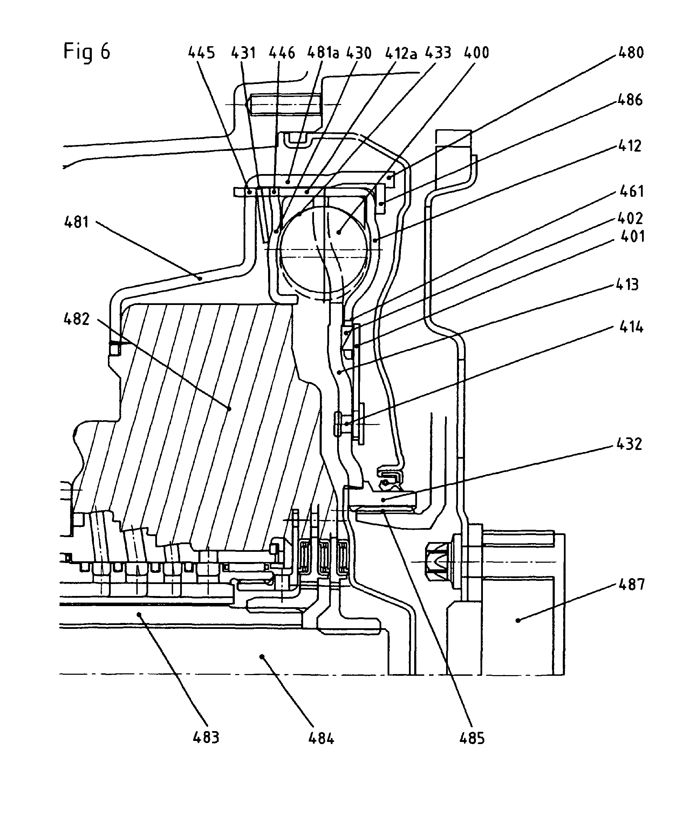

Die Figur 6 zeigt einen weiteren Antriebsstrang mit einem vierten Ausführungsbeispiel eines erfindungsgemäßen Torsionsschwingungsdämpfers 400 im Axialhalbschnitt. Ähnlich wie im voranstehenden Ausführungsbeispiel ist der Torsionsschwingungsdämpfer 400 eingangsseitig in hier nicht im Detail dargestellter Weise über eine Kurbelwelle 487 mit einem Verbrennungsmotor verbunden. Ausgangsseitig erfolgt die Anbindung an ein Getriebe mit zwei Getriebeeingangswellen 483, 484 über ein Kupplungsgehäuse 481 einer Doppelkupplung 482.

Der Torsionsschwingungsdämpfer 400 selbst umfasst als wesentliche Bestandteile ein über eine mit einer Steckverzahnung 485 versehene Eingangsnabe 432 koppelbares Primärelement, welches in an sich bekannter Art als Nabenplatte 413 ausgebildet ist sowie ein relativ zu diesem drehauslenkbares, federelastisch mit dem Primärelement gekoppeltes, einen abtriebsbildendes Sekundärelement, bestehend aus einem antriebsseitigen Halteblech 412 und einem abtriebsseitigen Halteblech 430. Weiterhin ist eine Reibvorrichtung vorgesehen, welche zwischen dem Primärelement und dem Sekundärelement wirkt.

Die Reibvorrichtung umfasst im vorliegenden Fall das antriebsseitige Halteblech 412, die Nabenplatte 413, eine Federplatte 401 sowie eine Mehrzahl von Reibklötzen 402.

Das antriebsseitige Halteblech 412 weist ähnlich den vorstehend beschriebenen Ausführungsbeispielen im Bereich des Innenumfangs eine Mehrzahl von Kulissenöffnungen 461 auf, in welche die Reibklötze 402 mit oder ohne Umfangsspiel eingesetzt sind. Diese Reibklötze 402 werden axial durch die mit der Nabenplatte 413 vernietete (Niete 414) Federplatte 401 reibschlusserzeugend gegen die Nabenplatte 413 gedrückt gehalten.

Die parallel zu dieser Reibvorrichtung wirkende Federkopplung ist in an sich bekannter Art ausgebildet. Zwischen zwei radial gegenüberliegend angeordneten, hier nicht dargestellten Abstützbügeln am antriebsseitigen Halteblech 412 sind eine Mehrzahl von Schraubenfedern 433 in Umfangsrichtung angeordnet. Diese Schraubenfedern 433 werden in an sich bekannter Weise mittels sogenannter Gleitschuhe gehalten, welche sich reibungsarm an der Innenwandung des Außenumfangs radial abstützen. In axialer Richtung werden die Gleitschuhe und Schraubenfedern 433 an den Radialflächen der antriebsseitigen und abtriebsseitigen Haltebleche 412, 430 gehalten. In Umfangsrichtung stützen sich die endseitigen Gleitschuhe an hier nicht dargestellten Abstützbügeln an den Halteblechen 412, 430 sowie an der Nabenplatte 413 ab.

In radialer Richtung wirkende Kräfte werden damit ausschließlich von dem Abschnitt 412a des antriebsseitigen Halteblechs 412 aufgenommen. Um das Gehäuse fliehkraftfest zu gestalten und das Drehmoment auf die Kupplung auch bei hohen Drehzahlen übertragen zu können, ist erfindungsgemäß vorgesehen, dass das Kupplungsgehäuse 481 das als Halbschale ausgebildete antriebsseitige Halteblech 412 umschließt. Der Abschnitt 481a des Kupplungsgehäuses 481 schließt dabei im Wesentlichen formschlüssig an dem Abschnitt 412a des antriebsseitigen Halteblechs 412 an. Die so entstehende Doppelschicht 412a, 481a aus Metall ist besonders steif und formstabil.

In axialer Richtung werden die Halbschalen 412, 430 und 481 dadurch fixiert, dass zwischen zwei Radialflächen des Kupplungsgehäuses 481 und des Halteblechs 430 eine Tellerfeder 431 eingesetzt ist, welche mittels eines Sicherungsrings 486 gespannt gehalten wird, welcher zwischen einen endseitig an dem Kupplungsgehäuse 481 vorgesehenen Haltebügel 480 und eine Radialfläche des Halteblechs 412 eingesetzt ist.

Eine drehfeste Verbindung zwischen Halteblech 412 und Kupplungsgehäuse 481 wird dadurch hergestellt, dass das Halteblech 412 endseitig eine Axialverzahnung 445 aufweist, welche in korrespondierend hierzu vorgesehene Axialausnehmungen des Kupplungsgehäuses 481 spielfrei eingreift. Die ebenfalls drehfeste Verbindung zwischen dem antriebsseitigen Halteblech 412 und dem abtriebsseitigen Halteblech 430 ergibt sich dadurch, dass eine außenumfangsseitig an dem abtriebsseitigen Halteblech 430 vorgesehene Radialverzahnung 446 in die vorstehend erwähnte Axialverzahnung 445 des antriebsseitigen Halteblechs 412 spielfrei eingreift.

Die Drehmomentübertragung ist somit ebenfalls gewährleistet.

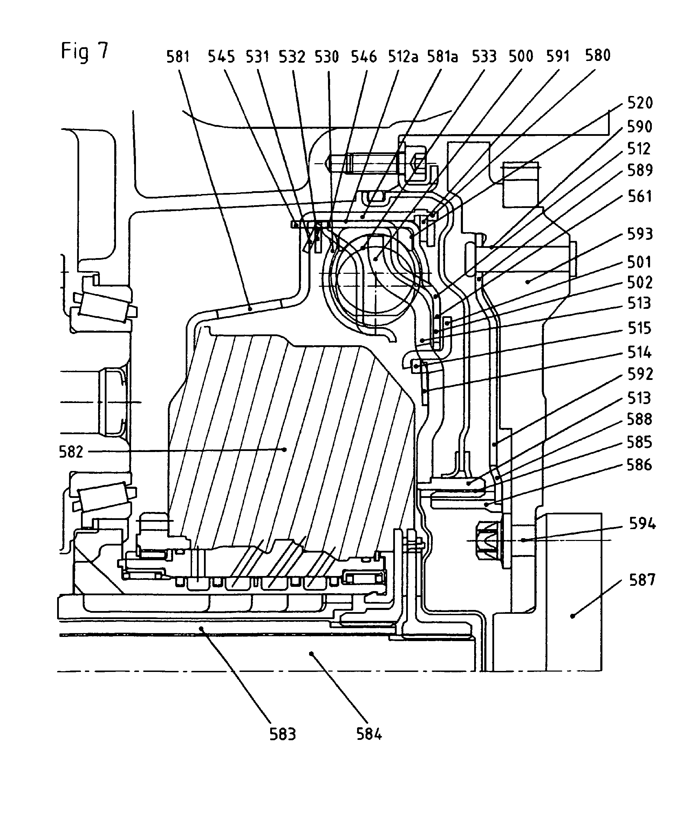

Der Figur 7 entnimmt man einen Antriebsstrang mit einem fünften Ausführungsbeispiel eines erfindungsgemäßen Torsionsschwingungsdämpfers 500 im Radialhalbschnitt. Antriebsseitig ist der Torsionsschwingungsdämpfer 500 über dessen Eingangsnabe mit einer Nabe 586 mit dem Innenrad 588 eine biege-/taumelweichen Scheibe 592 drehfest (Steckverzahnung 585) verbunden. Diese biege-/taumelweiche Scheibe 592 ist an deren Außenrand 589 mit einer Schwungmasse 593 vernietet (Niete 590).

Diese Schwungmasse ist wiederum mit einer Kurbelwelle 587 verschraubt (Schraube 594).

Abtriebsseitig besteht wie im vorstehend beschriebenen Ausführungsbeispiel gemäß der Figur 6 eine drehfeste Verbindung zu einem Kupplungsgehäuse 581 einer Doppelkupplung 582, welche die Kurbelwelle 587 wahlweise mit einer der beiden Getriebeeingangswellen 583, 584 eines Getriebes verbindet.

Der Torsionsschwingungsdämpfer 500 ist in weitgehend bekannter Weise ausgebildet.

So umfasst der Torsionsschwingungsdämpfer 500 als wesentliche Bestandteile ein Primärelement bestehend aus Nabenplatte 513 und Stützblech 501 sowie ein relativ drehauslenkbares, federelastisch mit dem Primärelement gekoppeltes, einen Abtrieb bildendes Sekundärelement bestehend aus antriebsseitigem Halteblech 512 und abtriebsseitigem Halteblech 530. Weiterhin ist eine Reibvorrichtung vorgesehen, welche zwischen Primärelement und Sekundärelement wirkt.

Die Reibvorrichtung wird wie vorstehend zu den Ausführungsbeispielen 1 bis 3 (Figur 1, 2, 3A, 4A, 5) beschrieben gebildet. Bestandteile sind das Stützblech 501, die Nabenplatte 513, das antriebsseitige Halteblech 512 mit Kulissenöffnungen 561, in welche jeweils Reibklötze 502 eingesetzt sind, sowie Sicherungsring 515 und Tellerfeder 514 zum Fixieren des Stützblechs 501 an der Nabenplatte 513 und zur Erzeugung eines Reibschlusses zwischen Nabenplatte 513 und Reibklötzen 502 sowie zwischen Stützblech 5,01 und Reibklötzen 502. Zur Funktionsweise im Detail wird auf die vorstehenden Beschreibungsteile verwiesen.

Auch die federelastische Kopplung ist in vorstehend beschriebener Weise ausgeführt. Die parallel zu dieser Reibvorrichtung wirkende Federkopplung ist in an sich bekannter Art ausgebildet. Zwischen zwei radial gegenüber liegend angeordneten, hier nicht dargestellten Abstützbügeln am antriebsseitigen Halteblech sind eine Mehrzahl von Schraubenfedern 533 in Umfangsrichtung angeordnet. Diese Schraubenfedern 533 werden in an sich bekannter Weise mittels sogenannter Gleitschuhe gehalten, welche sich reibungsarm an der Innenwandung des Außenumfangs radial abstützen. In axialer Richtung werden die Gleitschuhe und Schraubenfedern 533 an den Radialflächen des antriebsseitigen und abtriebsseitigen Halteblechs 512, 530 gehalten. In Umfangsrichtung stützen sich die endseitigen Gleitschuhe an hier nicht dargestellten Abstützbügeln an den Halteblechen 512, 530 sowie an der Nabenplatte 513 ab.

In radialer Richtung wirkende Kräfte werden damit ausschließlich von dem Abschnitt 512a des antriebsseitigen Halteblechs 512 aufgenommen. Um das Gehäuse fliehkraftfest zu gestalten und das Drehmoment auf die Kupplung auch bei hohen Drehzahlen übertragen zu können, ist erfindungsgemäß vorgesehen, dass das Kupplungsgehäuse 581 das als Halbschale ausgebildete antriebsseitige Halteblech 512 umschließt. Der Abschnitt 581a des Kupplungsgehäuses schließt dabei im Wesentlichen formschlüssig an dem Abschnitt 512a des antriebsseitigen Halteblechs 512 an. Die so entstehende Doppelschicht 512a, 581a aus Metall ist besonders steif und formstabil.

In axialer Richtung werden die Halbschalen 512, 530 und 581 dadurch fixiert, dass zwischen zwei Radialflächen des Kupplungsgehäuses 581 und des Halteblechs 530 eine Tellerfeder 531 eingesetzt ist, welche mittels eines Sicherungsrings 586 gespannt gehalten wird, welcher zwischen einen endseitig an dem Kupplungsgehäuse 581 vorgesehenen Haltebügel 580 und eine Radialfläche des Halteblechs 512 eingesetzt ist.

Eine drehfeste Verbindung zwischen dem antriebsseitigen Halteblech 512 und dem Kupplungsgehäuse 581 wird dadurch hergestellt, dass das Halteblech 512 endseitig eine Axialverzahnung 545 aufweist, welche in korrespondierend hierzu vorgesehene Axialausnehmungen des Kupplungsgehäuses 581 spielfrei eingreift. Eine drehfeste Verbindung zwischen dem antriebsseitigen Halteblech 512 und dem abtriebsseitigen Halteblech 530 ergibt sich dadurch, dass eine außenumfangsseitig an dem abtriebsseitigen Halteblech 530 vorgesehene Radialverzahnung 546 in die vorstehend erwähnte Axialverzahnung 545 des antriebsseitigen Halteblechs 512 spielfrei eingreift.

### Bezugszeichenliste

- 100: Torsionsschwingungsdämpfer
- 101: Stützblech (Primärelement)
- 102: Reibklotz
- 103: Reibklotz
- 104: Reibklotz
- 105: Reibklotz
- 106: Reibklotz
- 107: Reibklotz
- 108: Reibklotz
- 109: Reibklotz
- 110: Reibklotz
- 111: Reibklotz
- 112: antriebsseitiges Halteblech (Sekundärelement)
- 112a: Abschnitt
- 113: Nabenplatte (Primärelement)
- 114: Tellerfeder
- 115: Sicherungsring
- 116: endseitiger Gleitschuh
- 117: endseitiger Gleitschuh
- 118: endseitiger Gleitschuh
- 119: endseitiger Gleitschuh
- 120': Gleitschuh
- 121: Gleitschuh
- 122: Gleitschuh
- 123: Gleitschuh
- 124: Gleitschuh
- 125: Gleitschuh
- 126: Gleitschuh
- 127: Gleitschuh
- 128: Gleitschuh
- 129: Gleitschuh
- 130: abtriebsseitiges Halteblech (Sekundärelement)
- 130a: Abschnitt
- 131: Tellerfeder
- 132: Eingangsnabe
- 133: Schraubenfeder
- 134: Schraubenfeder
- 135: Schraubenfeder
- 136: Schraubenfeder
- 137: Schraubenfeder
- 138: Schraubenfeder
- 139: Schraubenfeder
- 140: Schraubenfeder
- 141: Schraubenfeder
- 142: Schraubenfeder
- 143: Schraubenfeder
- 144: Schraubenfeder
- 145: Axialverzahnung
- 146: Axialaussparung
- 147: Axialsteg
- 148: Axialsteg
- 149: Axialsteg
- 150: Axialsteg
- 151: Axialsteg
- 152: Axialsteg
- 153: Axialsteg
- 154: Axialsteg
- 155: Radialsteg
- 156: Radialsteg
- 157: Radialsteg
- 158: Radialsteg
- 159: Radialsteg
- 160: Radialsteg
- 161: Kulissenöffnung
- 162: Kulissenöffnung
- 163: Kulissenöffnung
- 164: Kulissenöffnung
- 165: Kulissenöffnung
- 166: Kulissenöffnung
- 167: Kulissenöffnung
- 168: Abstützbügel
- 169: Abstützbügel
- 170: Abstützbügel
- 171: Abstützbügel
- 172: Abstützbügel
- 173: Abstützbügel
- 174: Axialstegdurchführöffnung
- 175: Axialstegdurchführöffnung
- 176: Axialstegdurchführöffnung
- 177: Axialstegdurchführöffnung
- 178: Axialstegdurchführöffnung
- 179: Axialstegdurchführöffnung
- 180: Axialstegdurchführöffnung
- 181: Axialstegdurchführöffnung
- 182: Axialstegdurchführöffnung
- 183: Steckverzahnung
- 184: Steckverzahnung
- 185: Reibfläche
- 186: Reibfläche
- 187: Reibfläche
- 188: Reibfläche
- 189: Radialsteg
- 190: Radialsteg
- 191: Radialsteg
- 192: Radialsteg
- 193: Radialsteg
- 194: Radialsteg
- 195: Radialsteg
- 196: Radialsteg
- 197: Verzahnung

- α₀: Freiwinkel
- α₁: Freiwinkel
- L_{f}: Fensterlänge
- Lᵣ₀: Reibklotzlänge
- Lᵣ₁: Reibklotzlänge

- 200: Torsionsschwingungsdämpfer
- 201: Stützblech (Primärelement)
- 202: Reibklotz

- 212: antriebsseitiges Halteblech (Sekundärelement)
- 212a: Abschnitt
- 213: Nabenplatte (Primärelement)
- 214: Tellerfeder
- 215: Sicherungsring
- 216: endseitiger Gleitschuh

- 220: Gleitschuh
- 221: Gleitschuh

- 230: abtriebsseitiges Halteblech (Sekundärelement)
- 230a: Abschnitt

- 233a: Außenfeder
- 233b: Innenfeder
- 234a: Außenfeder
- 234b: Innenfeder
- 235a: Außenfeder
- 235b: Innenfeder

- 246: Axialaussparungen
- 247: Axialsteg

- 261: Kulissenöffnung
- 268: Abstützbügel

- 270: Abstützbügel

- 272: Abstützbügel

- 274: Axialstegdurchführöffnung
- 275: Axialstegdurchführöffnung
- 276: Axialstegdurchführöffnung
- 277: Axialstegdurchführöffnung

- 282: Steckverzahnung

- 285: Reibfläche
- 286: Reibfläche
- 287: Reibfläche
- 288: Reibfläche
- 289: Radialsteg

- α: Freiwinkel
- L_{f}: Fensterlänge
- Lᵣ: Reibklotzlänge

- 1200: Torsionsschwingungsdämpfer (Stand der Technik)
- 1230: Halteblech
- 1246: Radialverzahnung

- 300: Torsionsschwingungsdämpfer

- 301: Stützblech (Primärelement)
- 302: Reibklotz

- 312: antriebsseitiges Halteblech (Sekundärelement)
- 312a: Abschnitt
- 313: Nabenplatte (Primärelement)
- 314: Tellerfeder
- 315: Sicherungsring

- 330: abtriebsseitiges Halteblech (Sekundärelement)
- 330a: Abschnitt
- 331: Tellerfeder
- 332: Eingangsnabe
- 333: Schraubenfeder

- 345: Axialverzahnung
- 346: Radialausnehmung

- 361: Kulissenöffnung

- 368: Abstützbügel (antriebsseitiges Halteblech)
- 370: Abstützbügel (antriebsseitiges Halteblech)
- 372: Abstützbügel (Nabenplatte)

- 380: Haltebügel
- 381: Kupplungsgehäuse
- 382: Doppelkupplung
- 383: erste Getriebeeingangswelle (Hohlwelle)
- 384: zweite Getriebeeingangswelle (Zentral- oder Vollwelle)
- 385: Steckverzahnung
- 386: Nabe
- 387: Antriebswelle (Kurbelwelle)
- 388: Innenrand
- 389: Außenrand
- 390: Fixieröffnung
- 391: Niete
- 392: Abkoppelungselement (biege-/taumelweiche Scheibe)
- 393: Schwungrad
- 394: Schraube

- 400: Torsionsschwingungsdämpfer
- 401: Federplatte (Primärelement)
- 402: Reibklotz

- 412: antriebsseitiges Halteblech (Sekundärelement)
- 412a: Abschnitt
- 413: Nabenplatte (Primärelement)
- 414: Niete

- 430: abtriebsseitiges Halteblech
- 431: Tellerfeder
- 432: Eingangsnabe
- 433: Schraubenfeder

- 445: Axialverzahnung
- 446: Radialverzahnung

- 461: Kulissenöffnung

- 480: Haltebügel
- 481: Kupplungsgehäuse
- 482: Doppelkupplung
- 483: erste Getriebeeingangswelle (Hohlwelle)
- 484: zweite Getriebeeingangswelle (Vollwelle)
- 485: Steckverzahnung
- 486: Sprengring
- 487: Antriebswelle (Kurbelwelle)

- 500: Torsionsschwingungsdämpfer
- 501: Stützblech
- 502: antriebsseitiges Halteblech (Sekundärelement)

- 512: antriebsseitiges Halteblech (Sekundärelement)
- 512a: Abschnitt
- 513: Nabenplatte (Primärelement)
- 514: Tellerfeder
- 515: Sicherungsring

- 520: Gleitschuh

- 530: abtriebsseitiges Halteblech (Sekundärelement)
- 531: Tellerfeder
- 532: Sicherungsring
- 533: Schraubenfeder

- 545: Axialverzahnung
- 546: Radialverzahnung

- 561: Kulissenöffnung

- 580: Haltebügel
- 581: Kupplungsgehäuse
- 581a: Abschnitt
- 582: Doppelkupplung
- 583: erste Getriebeeingangswelle (Hohlwelle)
- 584: zweite Getriebeeingangswelle (Zentralwelle)
- 585: Steckverzahnung
- 586: Nabe
- 587: Antriebswelle (Kurbelwelle)
- 588: Innenrand
- 589: Außenrand
- 590: Vernietung
- 591: Sicherungsring
- 592: biege-/taumelweiche Scheibe
- 593: Schwungrad
- 594: Verschraubung

## Patentansprüche

1. Torsionsschwingungsdämpfer (100, 200, 300, 400, 500)
- mit einem mit einer Antriebseinrichtung koppelbaren Primärelement (113, 101, 213, 201; 313, 301; 413, 401; 513, 501),
- mit einem gegen die Wirkung eines elastisch verformbaren Dämpferelements (133, 134, 135, 136, 137, 138, 139, 140, 141, 142, 143, 144; 233a, 233b, 234a, 234b, 235a, 235b; 333; 433; 533) bezüglich dem Primärelement (113, 101; 213, 201; 313, 301; 413, 401; 513, 501) drehauslenkbaren abtriebsseitig koppelbaren Sekundärelement zur Weiterleitung des Antriebsmomentes (112, 130; 212, 230; 312, 330; 412, 430; 512, 530),
- wobei das Dämpferelement (133, 134, 135, 136, 137, 138, 139, 140, 141, 142, 143, 144; 233a, 233b, 234a, 234b, 235a, 235b; 333; 433; 533) unmittelbar oder mittelbar (116, 117, 118, 119, 120, 121, 122, 123, 124, 125, 126, 127, 128, 129; 216, 220, 221; 520) gegen ein Abstützelement (112a, 212a, 312a, 412a, 512a) des Torsionsschwingungsdämpfers (100, 200, 300, 400, 500) abstützbar oder abgestützt ist,
- wobei das Abstützelement als Doppelschicht (112a, 130a, 212a, 230a, 312a, 330a, 412a, 481a; 512a, 581a) ausgebildet ist,
- wobei die Doppelschicht (112a, 130a; 212a, 230a; 312a, 330a; 412a, 481a; 512a, 581a) durch zwei sich umschließende Halbschalen (112, 130; 212, 230; 312, 330; 412, 481; 512, 581) gebildet ist,
**dadurch gekennzeichnet, dass** die Halbschalen (112, 130; 212, 230; 312, 330; 412, 481; 512, 581) Bestandteile des Sekundärelements (112, 130; 212, 230; 312, 330; 412, 430; 512, 530) sind.

2. Torsionsschwingungsdämpfer (100, 200, 300, 400, 500) nach Anspruch 1,
**dadurch gekennzeichnet, dass** die Halbschalen (112, 130; 212, 230; 312, 330; 412, 481; 512, 581) mit dem Sekundärelement (112, 130; 212, 230; 312, 330; 412, 430; 512, 530) drehfest verbunden sind.

3. Torsionsschwingungsdämpfer (100, 200, 300, 400, 500) nach 3. Torsionsschwingungsdämpfer (100, 200, 300, 400, 500) nach einem der Ansprüche 1 bis 2,
**dadurch gekennzeichnet, dass** die Halbschalen (112, 130; 212, 230, 312, 330; 412, 481; 512, 581) wenigstens in einem Abschnitt (112a, 130a; 212a, 230a; 312a, 330a; 412a, 481a; 512a, 581a) formschlüssig aneinander grenzen.

4. Torsionsschwingungsdämpfer (100, 200, 300, 400, 500) nach einem der Ansprüche 1 bis 3,
**dadurch gekennzeichnet, dass**
- die eine der Halbschalen ein antriebaseitiges Halteblech (112, 212, 312) ist und dass
- die andere der Halbschalen ein abtriebsseitiges Halteblech (130, 230, 330) ist, welche Bestandteile des Sekundärelements (112, 130; 212, 230; 312, 330) des Torsionsschwingungsdämpfers (100, 200, 300, 400, 500) sind oder dass
- die eine der Halbschalen ein antriebs- oder abtriebsseitiges Halteblech (412, 512) ist, welches Bestandteil des Sekundärelements (412, 430; 512, 530) des Torsionsachwingungsdämpfers (400, 500) ist und dass
- die andere der Halbschalen Bestandteil eines Gehäuses oder ein Gehäuse, insbesondere ein Kupplungsgehäuse (481, 581), ist, welches insbesondere mit dem Sekundärelement (412, 430; 512, 530) des Torsionsschwingungsdämpfers (400, 500) drehtest verbunden ist.

5. Torsionsschwingungsdämpfer (100, 200, 300, 400, 500) nach einem der Ansprüche 3 bis 4,
**dadurch gekennzeichnet, dass** die eine der Halbschalen (112, 212, 312, 412, 512) eine Verzahnung (145, 245, 345, 445, 545) aufweist und dass die andere der Halbschalen (130, 230, 330, 481, 581) hierzu korrespondierende Aussparungen (146, 246, 346, 446, 546), Ausnehmungen oder Öffnungen aufweist, in welche die Zähne der Verzahnung (145, 245, 345, 445, 545) eingreifen.

6. Torsionsschwingungsdämpfer (100, 200, 300, 400, 500) nach Anspruch 5, **dadurch gekennzeichnet, dass** die Zähne der Verzahnung (145, 245, 345, 445, 545) in Umfangsrichtung spielfrei in die Aussparungen (146, 246, 346, 446, 546), Ausnehmungen oder Öffnungen eingreifen.

7. Torsionsschwingungsdämpfer (100, 200, 300, 400, 500) nach Anspruch 5 oder 6, **dadurch gekennzeichnet, dass** die Zähne der Verzahnung (145, 245, 345, 445, 545) im Wesentlichen in axialer Richtung verlaufen.

8. Torsionsschwingungsdämpfer (200, 300) nach einem der Ansprüche 5 bis 7,
**dadurch gekennzeichnet, dass** die Zähne (245, 345) endseitig radial vorzugsweise nach innen geknickt einen Haltebügel (380) bildend verlaufen und dass die beiden Halbschalen (212, 230; 312, 330) mit Hilfe eines Sprengrings (331) und wahlweise mit Hilfe eines Sicherungsrings aneinander fixierbar sind.

9. Torsionsschwingungsdämpfer (400, 500) nach einem der Ansprüche 1 bis B,
**dadurch gekennzeichnet, dass** die äußere (481, 581) der beiden Halbschalen (412, 481; 512, 581) endseitig einen Haltebügel (480, 580) aufweist und dass die beiden Halbschalen (412, 481; 512, 581) mit Hilfe eines Sprengrings (486, 591) und wahlweise mit Hilfe eines Sicherungsrings aneinander fixierbar sind.

## Claims

1. Torsional vibration damper (100, 200, 300, 400, 500)
- having a primary element (113, 101, 213, 201; 313, 301; 413, 401; 513, 501) which can be coupled to a driving appartus;
- having a secondary element (112, 130; 212, 230; 312, 330; 412, 430; 512, 530) for passing on the driving torque, which secondary element is rotationally deflectable, against the action of an elastically deformable damper element (133, 134, 135, 136, 137, 138, 139, 140, 141, 142, 143, 144; 233a, 233b, 234a, 234b, 235a, 235b; 333; 433; 533), with respect to said primary element (113, 101; 213, 201; 313, 301; 413, 401; 513, 501) and can be coupled on the driven side;
- wherein the damper element (133, 134, 135, 136, 137, 138, 139, 140, 141, 142, 143, 144; 233a, 233b, 234a, 234b, 235a, 235b; 333; 433; 533) can be supported or is supported, directly or indirectly (116, 117, 118, 119, 120, 121, 122, 123, 124, 125, 126, 127, 128, 129; 216, 220, 221; 520), against a supporting element (112a, 212a, 312a, 412a, 512a) on the torsional vibration damper (100, 200, 300, 400, 500);
- wherein the supporting element is constructed as a double layer (112a, 130a, 212a, 230a, 312a, 330a, 412a, 481a; 512a, 581a);
- wherein the double layer (112a, 130a; 212a, 230a; 312a, 330a; 412a, 481a; 512a, 581a) is formed by two half-shells (112, 130; 212, 230; 312, 330; 412, 481; 512, 581) which encompass one another;
**characterised in that**
the half-shells (112, 130; 212, 230; 312, 330; 412, 481; 512, 581) are constituent parts of the secondary element (112, 130; 212, 230; 312, 330; 412, 430; 512, 530).

2. Torsional vibration damper (100, 200, 300, 400, 500) according to claim 1,
**characterised in that**
the half-shells (112, 130; 212, 230; 312, 330; 412, 481; 512, 581) are connected to the secondary element (112, 130; 212, 230; 312, 330; 412, 430; 512, 530) in a torsion-proof manner.

3. Torsional vibration damper (100, 200, 300, 400, 500) according to either of claims 1 and 2,
**characterised in that**
the half-shells (112, 130; 212, 230; 312, 330; 412, 481; 512, 581) adjoin one another in a form-locking manner, at least in one section (112a, 130a; 212a, 230a; 312a, 330a; 412a, 481a; 512a, 581a).

4. Torsional vibration damper (100, 200, 300, 400, 500) according to one of claims 1 to 3,
**characterised in that**
- one of the half-shells is a metal retaining plate (112, 212, 312) on the driving side; and that
- the other half-shell is a metal retaining plate (130, 230, 330) on the driven side, which metal retaining plates are constituent parts of the secondary element (112, 130; 212, 230; 312, 330) of the torsional vibration damper (100, 200, 300, 400, 500); or that
- one of the half-shells is a metal retaining plate (412, 512) on the driving side or driven side, which is a constituent part of the secondary element (412, 430; 512, 530) of the torsional vibration damper (400, 500); and that
- the other half-shell is a constituent part of a housing or is a housing, in particular a clutch housing (481, 581), which is connected, in particular, to the secondary element (412, 430; 512, 530) of the torsional vibration damper (400, 500) in a torsion-proof manner.

5. Torsional vibration damper (100, 200, 300, 400, 500) according to either of claims 3 and 4,
**characterised in that**
one of the half-shells (112, 212, 312, 412, 512) has a tooth system (145, 245, 345, 445, 545), and that the other half-shell (130, 230, 330, 481, 581) has recesses (146, 246, 346, 446, 546), clearances or apertures which correspond thereto and in which the teeth of the tooth system (145, 245, 345, 445, 545) engage.

6. Torsional vibration damper (100, 200, 300, 400, 500) according to claim 5,
**characterised in that**
the teeth of the tooth system (145, 245, 345, 445, 545) engage without any play in the peripheral direction in the recesses (146, 246, 346, 446, 546), clearances or apertures.

7. Torsional vibration damper (100, 200, 300, 400, 500) according to claim 5 or 6,
**characterised in that**
the teeth of the tooth system (145, 245, 345, 445, 545) extend substantially in the axial direction.

8. Torsional vibration damper (200, 300) according to one of claims 5 to 7,
**characterised in that**
the teeth (245, 345) extend, at the end, radially and preferably in an inwardly bent manner and so as to form a retaining clip (380), and that the two half-shells (212, 230; 312, 330) can be fixed to one another with the aid of a spring ring (331) and, optionally, with the aid of a securing ring.

9. Torsional vibration damper (400, 500) according to one of claims 1 to 8,
**characterised in that**
the outer (461, 581) of the two half-shells (412, 481; 512, 581) has a retaining clip (480, 580) at the end, and that the two half-shells (412, 481; 512, 581) can be fixed to one another with the aid of a spring ring (486, 591) and, optionally, with the aid of a securing ring.

## Revendications

1. Amortisseur de vibrations de torsion (100, 200, 300, 400, 500),
- avec un élément primaire (113, 101 ; 213, 201; 313, 301 ; 413, 401 ; 513, 501) susceptible d'être couplé à un dispositif entraînement,
- avec un élément secondaire(112, 130 ; 212, 230; 312, 330 ; 412, 430 ; 512, 530), susceptible d'être couplé, côté mené, avec un débattement en rotation par rapport à l'élément primaire (113, 101 ; 213, 201 ; 313, 301 ; 413, 401 ; 513, 501), à l'encontre de l'effet d'un élément amortisseur (133, 134, 135, 136, 137, 138, 139, 140, 141, 142, 143, 144 ; 233a, 233b, 234a, 234b, 235a, 235b ; 333 ; 433 ; 533) déformable élastiquement, afin de transmettre le couple d'entraînement,
- l'élément amortisseur (133, 134, 135, 136, 137, 138, 139, 140, 141, 142, 143, 144 ; 233a, 233b, 234a, 234b, 235a, 235b ; 333 ; 433 ; 533) étant susceptible d'être soutenu ou étant soutenu, directement ou indirectement (116, 117, 118, 119, 120, 121, 122, 123, 124, 125, 126, 127, 128, 129 ; 216, 220, 221 ; 520), contre un élément d'appui (112a, 212a, 312a, 412a, 512a) de l'amortisseur de vibrations de torsion (100, 200, 300, 400, 500),
- l'élément d'appui étant réalisé sous forme de couche double (112a, 130a, 212a, 230a, 312a, 330a, 412a, 481a, 512a, 581a),
- la couche double (112a, 130a ; 212a, 230a; 312a, 330a ; 412a, 481a ; 512a, 581a) étant formée par deux demi-coques (112, 130 ; 212, 230 ; 312, 330 ; 412, 481; 512, 581) ayant un rôle d'enveloppement,
**caractérisé en ce que** les demi-coques (112, 130 ; 212, 230 ; 312, 330 ; 412, 481 ; 512, 581) sont des composants de l'élément secondaire (112, 130; 212, 230 ; 312, 330 ; 412, 430 ; 512, 530).

2. Amortisseur de vibrations de torsion (100, 200, 300, 400, 500) selon la revendication 1, **caractérisé en ce que** les demi-coques (112, 130 ; 212, 230 ; 312, 330 ; 412, 481 ; 512, 581) sont reliées de façon assujettie en rotation à l'élément secondaire (112, 130 ; 212, 230 ; 312, 330 ; 412, 430 ; 512, 530).

3. Amortisseur de vibrations de torsion (100, 200, 300, 400, 500) selon l'une des revendications 1 à 2, **caractérisé en ce que** les demi-coques (112, 130 ; 212, 230 ; 312, 330 ; 412, 481 ; 512, 581) sont délimitées les unes par rapport aux autres, en créant une liaison à ajustement de forme, au moins dans un tronçon (112a, 130a; 212a, 230a; 312a, 330a ; 412a, 481a ; 512a, 581a).

4. Amortisseur de vibrations de torsion (100, 200, 300, 400, 500) selon l'une des revendications 1 à 3, **caractérisé en ce qu'**
- une première des demi-coques est une tôle de maintien (112, 212, 312) située côté menant, et **en ce que**
- l'autre des demi-coques est une tôle de maintien (130, 230, 330) située côté mené, qui sont des composants de l'élément secondaire (112, 130; 212, 230; 312, 330) de l'amortisseur de vibrations de torsion (100, 200, 300, 400, 500), ou **en ce que**
- une première demi-coque est une tôle de maintien (412, 512) située côté menant ou côté mené, qui est un composant de l'élément secondaire (412, 430 ; 512, 530) de l'amortisseur de vibrations de torsion (400, 500), et **en ce que**
- l'autre des demi-coques est un composant d'un carter ou un carter, en particulier, un carter d'embrayage (481, 581) qui, en particulier, est relié de façon assujettie en rotation à l'élément secondaire (412, 430 512, 530) de l'amortisseur de vibrations (400, 500).

5. Amortisseur de vibrations de torsion (100, 200, 300, 400, 500) selon l'une des revendications 3 à 4, **caractérisé en ce qu'**une première des demi-coques (112, 212, 312, 412, 512) présente une denture (145, 245, 345, 445, 545) et **en ce que** l'autre des demi-coques (130, 230, 330, 481, 581) présente des évidements (146, 246, 346, 446, 546), des creusements ou des ouvertures lui correspondant, dans lesquel(le)s s'engagent les dents de la denture (145, 245, 345, 445, 545).

6. Amortisseur de vibrations de torsion (100, 200, 300, 400, 500) selon la revendication 5, **caractérisé en ce que** les dents de la denture (145, 245, 345, 445, 545) s'engagent en direction périphérique, sans jeu, dans les évidements (146, 246, 346, 446, 546), les creusements, ou les ouvertures.

7. Amortisseur de vibrations de torsion (100, 200, 300, 400, 500) selon la revendication 5 ou 6, **caractérisé en ce que** les dents de la denture (145, 245, 345, 445, 545) s'étendent sensiblement en direction axiale.

8. Amortisseur de vibrations de torsion (100, 200, 300, 400, 500) selon l'une des revendications 5 à 7, **caractérisé en ce que** les dents (245, 345) s'étendent, côté extrémité, radialement, de préférence en formant un étrier de maintien (380) à point de brisure vers l'intérieur, et **en ce que** les deux demi-coques (212, 230 ; 312, 330) sont susceptibles d'être fixées l'une à l'autre à l'aide d'un circlip (331) et, au choix, à l'aide d'une bague de sécurité.

9. Amortisseur de vibrations de torsion (100, 200, 300, 400, 500) selon l'une des revendications 1 à 8, **caractérisé en ce que** la demi-coque extérieure (481, 581) des deux demi-coques (412, 481 ; 512, 581) présente, côté extrémité, un étrier de maintien (480, 580), et **en ce que** les deux demi-coques (412, 481 ; 512, 581) sont susceptibles d'être fixées l'une à l'autre à l'aide d'un circlip (486, 591) et, au choix, à l'aide d'une bague de sécurité.
